# EUROPEAN PATENT SPECIFICATION

(11) **EP 4 310 990 B1**
(45) Date of publication and mention of the grant of the patent: **29.04.2026**
(21) Application number: 22771159.5
(22) Date of filing: 07.03.2022
(51) Int. Cl.: H01M 10/613, H01M 10/643, H01M 10/6551, H01M 10/6554, H01M 10/6557, H01M 10/6563, H01M 50/204, H01M 50/213

(54) **BATTERY PACK**
BATTERIEPACK
BLOC-BATTERIE

(30) Priority: 17.03.2021 JP 2021043058
(43) Date of publication of application: 24.01.2024
(73) Proprietor: Panasonic Energy Co., Ltd., Osaka 570-8511 (JP)
(72) Inventor: FUKUDA Shinsuke, Kadoma-shi, Osaka 571-0057 (JP)
(74) Representative: Novagraaf International SA
(86) International application number: PCT/JP2022/009586
(87) International publication number: WO 2022/196405

(56) References cited:
- CN-A- 109 119 724
- JP-A- 2000 188 091
- JP-A- 2001 203 004
- JP-A- 2004 227 986
- JP-A- 2011 216 366
- JP-A- 2012 156 057
- US-B2- 10 873 062

## Description

### TECHNICAL FIELD

The present invention relates to a battery pack including a casing accommodating a battery core block including battery cells disposed at predetermined positions in a battery holder.

### BACKGROUND ART

A battery pack for applications, such as an electric bicycle and a power assisted bicycle, requiring high output includes battery cells connected in series and parallel to one another and accommodated in a casing. The battery pack provides higher output voltage (V) by increasing the number of batteries connected in series, and provide larger charge-discharge capacity (Ah) by increasing the number of batteries connected in parallel.

As a battery pack for use in these applications, a battery pack has been developed in which cylindrical batteries is disposed in a battery holder and is accommodated in a casing. (PTL 1). Further, PTL 2 relates to a battery pack which contains a storage battery inside a case and is used as a power source for electric tools and the like, PTL 3 relates to a rechargeable battery.

### Citation List

### Patent Literature

PTL 1: Japanese Patent Laid-Open Publication No. 2011-216366
PTL 2: Japanese Patent Application Publication No. 2000-188091
PTL 3: US Patent No. 10,873,062

### SUMMARY OF THE INVENTION

### Technical Problem

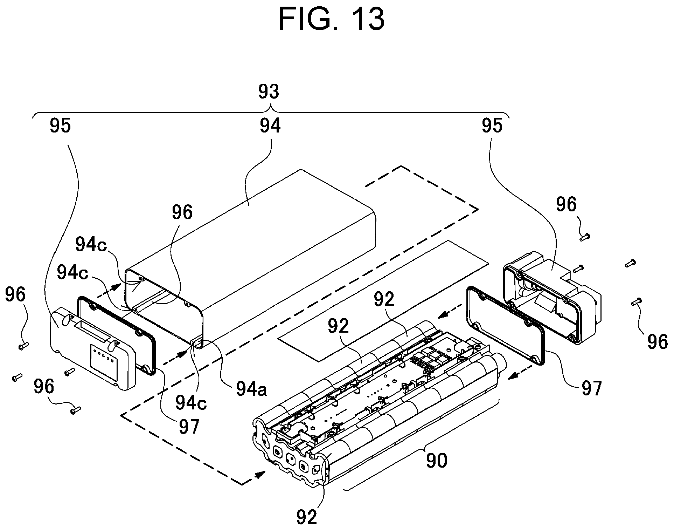

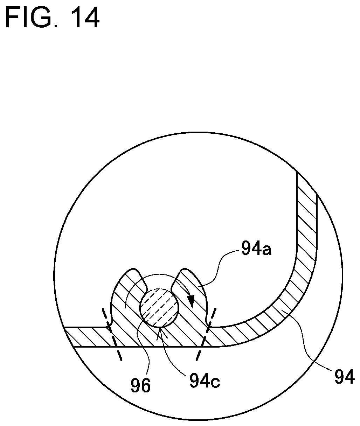

FIG. 13 shows an exploded perspective view of a conventional battery pack disclosed in PTL 1. In the battery pack, battery cells are disposed at predetermined positions in battery holder 92 to constitute core block 90, and core block 90 is inserted into casing 93. In casing 93, both end surfaces of heat-dissipating case 94 having a tubular shape are closed with closing parts 95 via packings 97. Casing 93 accommodates core block 90 therein. Heat-dissipating case 94 has a tubular shape with both ends opened. In order to fix closing parts 95 at the both ends to close the both end openings, heat-dissipating case 94 includes fixing ribs 94a disposed in rows with the fixing ribs 94a protruding from the inner surface of the heat-dissipating case 94 and extending in the longitudinal direction, as shown in the enlarged cross-sectional view of FIG. 14. Fixing ribs 94a have threaded holes 94c extending in the longitudinal direction. Screws 96 that penetrate closing parts 95 are screwed into the respective threaded holes 94c, thereby fixing closing parts 95 at the both ends of the heat-dissipating case 94.

When an internal short circuit occurs in a battery cell, reactions between an electrolyte solution and active materials of positive/negative electrodes may be occur, and may induce decomposition/vaporization of electrolyte solution. These phenomena accompany heat generation. Then the generated heat in turn accelerates these reactions at an increasingly fast rate. As the reactions progress further, the internal pressure abnormally rises due to generation of gases, which causes a discharge valve disposed in the battery cell to open, resulting in vigorous ejection, for a short period, of vaporized electrolyte solution and high-temperature in-cell materials. Such phenomena of heat accelerating reactions at an increasingly fast rate to eventually cause ejection of materials, are referred to herein as "thermal runaway." The ejected matter has a high temperature and is high-speed powder-mixed fluid accompanied by flame, with the fluid including extremely hot and fine fragment-like in-cell materials and vaporized electrolyte solution components. The ejected matter is ejected to an inside of the battery pack, thereby inducing thermal runaway of other battery cells. As a result, the thermal runaway occurs in a chain from one battery cell to another, causing serious thermal failures that spread fire throughout the battery pack. Moreover, unless the ejected matter is discharged outside the battery pack in a safe state of the ejected matter being sufficiently cooled, it may cause serious thermal failures in the device connected to the battery pack.

In this regard, the battery pack described above cannot effectively cool the ejected matter ejected from the battery cell undergoing thermal runaway even if it adopts a metal excellent in heat dissipation as the casing. Therefore, the battery pack cannot provide both the effective prevention of thermal runaway of other battery cells and the discharging of the ejected matter to the outside of the battery pack in a safe state of the ejected matter being cooled sufficiently.

The present invention has been developed for a purpose of eliminating the above-described adverse effects of the conventional art, and an object of the present invention is to provide a battery pack having the following advantages. The battery pack effectively cools the heat generated inside the battery pack, in particular, effectively cools the ejected matter ejected from a battery cell undergoing thermal runaway, which prevents serious thermal failures such as the spread of fire throughout the entire battery pack and thermal damage to the device connected to the battery pack, achieving the high safety of the battery pack.

### Solution to Problem

A battery pack according to an aspect of the present invention includes: a core block including battery cells and a battery holder accommodating the battery cells disposed at predetermined positions therein; and a casing accommodating the core block therein. The casing includes: a heat-dissipating case having both end openings; and closing parts closing the both end openings of the heat-dissipating case. The heat-dissipating case includes: a tubular part made of metal and having a tubular shape having an inner surface, the core block being disposed inside the tubular part; and heat-absorbing fins made of metal and protruding from the tubular part to an inside of the tubular part, the heat-absorbing fins being arranged in rows and extending in an axial direction of the tubular part, the heat-absorbing fins being thermally coupled to the inner surface of the tubular part.

### Advantageous Effect of Invention

The battery pack described above performs effective heat dissipation of heat generated inside the battery pack to outside, thereby achieving high safety. In particular, the battery pack effectively dissipates, to outside, thermal energy of ejected matter ejected from a battery cell undergoing thermal runaway so as to prevent other battery cells from undergoing thermal runaway. The battery pack discharges the ejected matter to outside in a safe state of the ejected matter being sufficiently cooled. This configuration prevents spread of fire throughout the entire battery pack and thermal damage to the device connected to the battery pack, thereby achieving the high safety of the battery pack.

### BRIEF DESCRIPTION OF DRAWINGS

FIG. 1 is a schematic transverse cross-sectional view of a battery pack according to Exemplary Embodiment 1 of the present invention.
FIG. 2 is a schematic exploded perspective view of the battery pack according to Embodiment 1 of the invention.
FIG. 3 is a schematic transverse cross-sectional view of a battery pack according to Exemplary Embodiment 2 of the invention.
FIG. 4 is a schematic exploded perspective view of the battery pack according to Embodiment 2 of the invention.
FIG. 5 is a schematic transverse cross-sectional view of a battery pack according to exemplary Embodiment 3 of the invention.
FIG. 6 is a schematic exploded perspective view of the battery pack according to Embodiment 3 of the invention.
FIG. 7 is a schematic transverse cross-sectional view of a battery pack according to Exemplary Embodiment 4 of the invention.
FIG. 8 is a schematic exploded perspective view of the battery pack according to Embodiment 4 of the invention.
FIG. 9 is a schematic transverse cross-sectional view of a battery pack according to exemplary Embodiment 5 of the invention.
FIG. 10 is a schematic exploded perspective view of the battery pack according to Embodiment 5 of the invention.
FIG. 11 is a schematic exploded perspective view of a battery pack according to Exemplary Embodiment 6 of the invention.
FIG. 12 is a schematic transverse cross-sectional view of a battery pack according to Exemplary Embodiment 7 of the invention.
FIG. 13 is an exploded perspective view of a conventional battery pack.
FIG. 14 is an enlarged cross-sectional view of a main part of a heat-dissipating case of the battery pack shown in FIG. 13.

### DESCRIPTION OF EMBODIMENTS

A battery pack according to an aspect of the present invention includes: a core block including battery cells and a battery holder accommodating the battery cells disposed at predetermined positions therein; and a casing accommodating the core block therein. The casing includes: a heat-dissipating case having both end openings; and closing parts closing the both end openings of the heat-dissipating case. The heat-dissipating case includes: a tubular part made of metal and having a tubular shape having an inner surface, the core block being disposed inside the tubular part; and heat-absorbing fins made of metal and protruding from the tubular part to an inside of the tubular part, the heat-absorbing fins being arranged in rows and extending in an axial direction of the tubular part, the heat-absorbing fins being thermally coupled to the inner surface of the tubular part.

The battery pack described above efficiently dissipates thermal energy of ejected matter from a battery cell to outside, thereby preventing other battery cells from thermal runaway. In addition, the battery pack discharges the ejected matter to outside in a safe state of the ejected matter having been sufficiently cooled, which achieves the high safety of the battery pack. This is because, in the battery pack, the casing includes the heat-dissipating case having the both end openings and the closing parts closing the both end openings of the heat-dissipating case, and the heat-dissipating case includes the metal tubular part accommodating the core block and the metal heat-absorbing fins disposed in rows. The heat-absorbing fins are made of metal and thermally coupled to the inner surface of the tubular part, protrude from the tubular part to an inside of the tubular part, and extend along an axial direction of the tubular part. In this configuration, the heat-absorbing fins disposed in rows, which are thermally coupled to inner surface of the tubular part and protrude inward therefrom, absorb the thermal energy of the ejected matter ejected from a battery cell, with high absorption efficiency due to the wide areas of the fins. Then the heat-absorbing fins having absorbed the thermal energy, conduct the absorbed thermal energy to the tubular part that is thermally coupled to the heat-absorbing fins. Further, the tubular part having received the thus-conducted thermal energy dissipates the received thermal energy to the outside with high dissipation efficiency due to the wide area of the tubular part.

In a battery pack according to another aspect of the present invention, the heat-dissipating case has a one-piece structure made of metal including the tubular part and the heat-absorbing fins which are unitarily formed with one another.

The battery pack described above has an advantage that it dissipates heat generated inside the battery pack to outside with higher efficiency, thereby realizing the high safety of the battery pack. This is because, since the heat-absorbing fins and the tubular part are unitarily formed into a one-piece structure made of metal, the heat is efficiently conducted from the heat-absorbing fins to the tubular part. Moreover, the unitarily-forming of both the tubular part and the heat-absorbing fins in rows also provides another advantage that their integration enhances the rigidity of the entire heat-dissipating case, stably accommodating the core block inside the case.

In a battery pack according to still another aspect of the present invention, the heat-absorbing fins are connected to the closing parts, and the closing parts are connected to the tubular part, such that the heat-absorbing fins are thermally coupling to the inner surface of the tubular part via the closing parts.

In the battery pack described above, the tubular part and the heat-absorbing fins are members separate from one another. The heat-absorbing fins are inserted into the tubular part, and the closing parts are fixed to the tubular part. This configuration allows the heat-absorbing fins to be disposed at predetermined positions in the tubular part in a state of the heat-absorbing fins are thermally coupled to the tubular part. The battery pack that can be assembled while being in this state, provides the following advantages. That is, the tubular part permits low-cost volume production because of its simple shape without heat-absorbing fins. Then, the tubular part allows the core block to be smoothly inserted into the tubular part, resulting in simplified assembling steps thereof. In addition, the structure of the heat-absorbing fins being coupled to the closing parts, allows the heat-absorbing fins to be coupled to the closing parts in a state of preferable thermal coupling, which results in more preferable heat conduction from the heat-absorbing fins to the closing parts, achieving further advantages of higher efficiency of heat dissipation.

In a battery pack according to still another aspect of the present invention, the tubular part, the heat-absorbing fins, and the closing parts are made of members separated from one another. The heat-absorbing fins disposed in the rows are connected to one another to constitute a fin unit. The fin unit is inserted into the tubular part, such that the fin unit is connected to the inner surface of the tubular part and is thermally coupled to the inner surface of the tubular part.

The battery pack described above has advantages of being easily assembled with the heat-absorbing fins disposed in rows being connected and thermally coupled to the inner surface of the tubular part. This is because, prior to the insertion of the fin unit into the tubular part, the heat-absorbing fins disposed in rows are coupled to the fin unit, thereby allowing each of the heat-absorbing fins to be coupled to the inner surface of the tubular part in a state of thermal coupling.

In a battery pack according to still another aspect of the present invention, each of the heat-absorbing fins includes a contact projection contacting the inner surface of the tubular part such that the contact projection is thermally coupled to the inner surface of the tubular part. The heat-absorbing fins disposed inside the tubular part are connected to the inner surface of the tubular part such that the each of the heat-absorbing fins is thermally coupled to the inner surface of the tubular part via the contact projection.

In the battery pack described above, since the heat-absorbing fins include the contact projection, and yet, since the heat-absorbing fins disposed inside the tubular part are coupled, via the contact projection, to the inner surface of the tubular part in a state of thermal coupling, the heat-absorbing fins disposed inside the tubular part are reliably coupled to the tubular part in a state of thermal coupling. In particular, since the contact projection disposed on the heat-absorbing fins is in contact with the inner surface of the tubular part, it also provides another advantage of smooth insertion of the heat-absorbing fins, with lower passing resistance, into the interior of the tubular part.

In a battery pack according to still another aspect of the present invention, the heat-dissipating case includes ducts, each of the ducts being provided between the inner surface of the tubular part and a corresponding one of the heat-absorbing fins, the ducts being configured to flow ejected matter ejected from the battery cells into the ducts.

In the battery pack described above, the heat-absorbing fins also serve as wall surfaces that constitute the ducts, thereby constituting the ducts between the heat-absorbing fins and the inner surface of the tubular part. This provides advantages that the ejected matter including exhaust gases of high-temperature and pressure ejected from a battery cell undergoing thermal runaway is guided to the ducts, thereby preventing other battery cells from being induced to undergo thermal runaway. This is because the guiding, to the ducts, of the ejected matter ejected from the battery cell undergoing thermal runaway, results in the prevention of other battery cells from being heated. The battery pack of this configuration has further advantages that, since the ducts communicate with an exhaust opening disposed in the casing, the exhaust gases are discharged to the outside, thereby preventing the induction of thermal runaway more effectively.

In a battery pack according to still another aspect of the present invention, the ducts are disposed at locations opposite to each other on an inner side of the tubular part in a transverse cross section of the heat-dissipating case.

In the battery pack described above, the tubular part of the heat-dissipating case includes the ducts at locations opposite to each other in the interior of the tubular part, and the tubular part accommodates the core block that discharges the ejected matter such as exhaust gases to both sides. This configuration provides the battery pack with advantages that the ejected matter ejected from a battery cell undergoing thermal runaway is smoothly guided into the ducts to prevent the induction of thermal runaway.

In a battery pack according to still another aspect of the present invention, the ducts comprises three or more ducts provided along the inner surface of the tubular part in a transverse cross section of the tubular part.

In the battery pack described above, since the tubular part of the heat-dissipating case includes the three or more ducts along the inner surface of the tubular part, the ejected matter such as exhaust gases ejected from a battery cell accommodated in the core block is smoothly guided to the nearest duct and discharged through it. This provides advantages preventing the induction of thermal runaway.

In a battery pack according to still another aspect of the present invention, the heat-absorbing fins include a pair of heat-absorbing fins disposed at locations opposite to each other with respect to a slit. Each of the pair of heat-absorbing fins has a first side edge and a second side edge, the first side edge being connected to the inner surface of the tubular part such that the first side edge is thermally coupled to the inner surface of the tubular part, the second side edge serving as an opening edge of the slit.

in the battery pack described above, since the pair of the heat-absorbing fins are disposed at the locations opposite to each other with respect to the slit, the ejected matter such as exhaust gases having been ejected from a battery cell passes through the slit, collides with the inner surfaces of the tubular part, thereby decreases its energy, and diverges to the both sides to flow into the respective ducts. Therefore, this provides advantages of preventing the thermal runaway from being induced by the ejected matter of high-temperature and pressure ejected from the battery cell undergoing thermal runaway. In particular, the exhaust gases the flowing of which has been split and diverted to both sides toward different directions when passing through the slit, are prevented from flowing to other battery cells, thereby resulting in effective prevention of the induction of thermal runaway.

In a battery pack according to still another aspect of the present invention, the tubular part includes a convex portion provided on a surface of the tubular part facing the slit, the convex portion extending along the slit.

The battery pack described above has advantages that the ejected matter having passed through the slit collides with the convex portion, is rapidly diverted to the both sides by the surface of the convex portion to flow along the inner surface of the tubular part, resulting in split-flowing of the ejected matter into the duct.

In a battery pack according to still another aspect of the present invention, the inner surface of the tubular part and the heat-absorbing fins are arcuately curved, and the ducts gradually narrowing toward both side edges of the ducts.

In a battery pack according to still another aspect of the present invention, the heat-dissipating case is a metal molded body having a one-piece structure having an identical shape in transverse cross sections of the heat-dissipating case over an entire region of the heat-dissipating case.

The battery pack described above has advantages that the tubular part and the heat-absorbing fins can be integrally formed into a one-piece structure made of metal such as aluminum to configure the heat-dissipating case, which allows efficient volume production thereof.

In a battery pack according to still another aspect of the present invention, the tubular part has a tubular shape formed by either extrusion molding or pultrusion molding.

In a battery pack according to still another aspect of the present invention, the heat-dissipating case is made of either aluminum or magnesium.

In a battery pack according to still another aspect of the present invention is the battery pack according to any one of the exemplary embodiments described above, the battery pack further includes heat-dissipating rods disposed between the heat-absorbing fins and the battery cells and extending in the axial direction of the tubular part.

The battery pack described above has advantages that the thermal energy generated by a battery cell can be absorbed by both the heat-dissipating rods and the heat-absorbing fins, allowing more effective prevention of the induction of thermal runaway.

In a battery pack according to still another aspect of the present invention, the heat-dissipating rods are thermally coupled to the heat-absorbing fins.

The battery pack described above has advantages that the thermal energy having been absorbed by the heat-dissipating rods can be efficiently dissipated from the tubular part through the heat-absorbing fins to the outside, resulting in more efficient heat dissipation of the heat generated in the battery cells.

In a battery pack according to still another aspect of the present invention, the heat-dissipating rods function as fastening members fastening the closing parts.

In a battery pack according to still another aspect of the present invention, the heat-absorbing fins function as fastening members fastening the closing parts.

Hereinafter exemplarily embodiments of the present invention will be described with reference to the accompanying drawings. However, the exemplary embodiments described below are examples for embodying the technical idea of the present invention, and the present invention is not limited to the following description. Moreover, this specification never limits the members described in the claims to the members of the exemplary embodiments. Unless otherwise specified, the dimensions, materials, shapes, relative positions, and the like of the configuration components described in the exemplary embodiments are not intended to limit the scope of the present invention but are merely illustrative examples. It should be noted that the sizes, positional relationship, and the like of members illustrated in the drawings may be exaggerated for clarity of explanation. Furthermore, in the following description, the same names and reference numerals indicate the same or similar members, and detailed description will be appropriately omitted. Furthermore, regarding elements that configure the present invention, a plurality of elements may be composed of the same member so that one member serves as a plurality of elements, or conversely, the function of one member can be shared and achieved by a plurality of members. Also, the description of some of examples or embodiments may be applied to other examples, embodiments or the like.

The battery pack of the present invention is mainly mounted on an electric vehicle and supplies electric power to its driving motor. The present invention may be used, for example, as a power supply for a power assisted bicycle, an electric motorcycle, an electric wheelchair, an electric tricycle, an electric cart, and the like. However, the present invention is not intended to specifically limit the applications of the battery pack, and can also be used as a power supply for various electric devices used indoors and outdoors such as a cleaner and an electric tool.

### Exemplary Embodiment 1

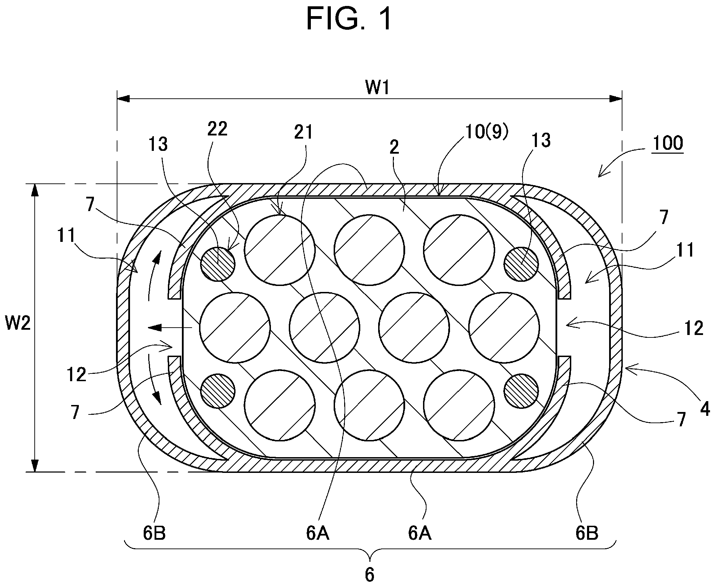

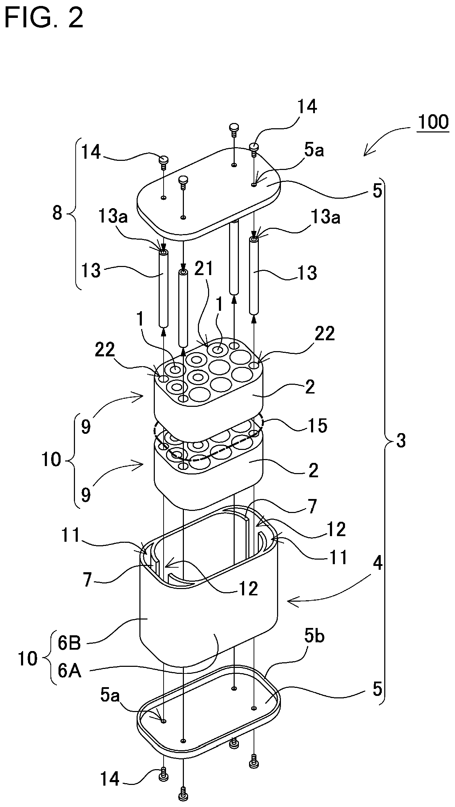

FIGS. 1 and 2 shows a battery pack according to Exemplary Embodiment 1 of the present invention. FIG. 1 is a schematic transverse cross-sectional view of the battery pack. FIG. 2 is a schematic exploded perspective view of the battery pack. Battery pack 100 shown in these figures includes battery core block 10 including battery cells 1 disposed at predetermined positions in battery holder 2, and casing 3 accommodating core block 10 therein. Casing 3 includes heat-dissipating case 4 having both end openings. Casing 3 includes core block 10 disposed inside heat-dissipating case 4, and closing parts 5 that close both end openings of heat-dissipating case 4. Closing parts 5 are fixed with fastening members 8 at locations at which closing parts 5 close the both end openings of heat-dissipating case 4. Battery pack 100 shown in FIG. 2 accommodates, in casing 3, core block 10 in which battery blocks 9 are stacked in the axial direction of heat-dissipating case 4.

### Core Block 10

Core block 10 includes battery blocks 9 in which battery cells 1 are arranged in battery holders 2 in multiple stages and multiple rows, as shown in FIGS. 1 and 2. In core block 10 shown in FIG. 2, two sets of battery blocks 9 are stacked in a longitudinal direction, i.e., the longitudinal direction of battery cells 1 so as to be linearly connected to one another. In core block 10 described above, battery cells 1 are connected in parallel to provide an increased charge-discharge capacity (Ah) of the battery, and battery cells 1 are connected in series to provide an increased output voltage (V). Although core block 10 shown in the Figure includes battery blocks 9, the core block may include a single battery block. Moreover, a core block including the battery blocks may include three or more sets of battery blocks.

### Battery Block 9

In each battery block 9, as shown in FIGS. 1 and 2, battery holder 2 includes insertion tubes 21 for battery cells 1 and battery cells 1 are inserted into respective insertion tubes 21, thereby disposing battery cells 1 at their respective predetermined positions. In battery block 9, rechargeable battery cells 1 are disposed in battery holder 2 in multiple stages and multiple rows.

Each battery cell 1 is a cylindrical rechargeable secondary battery that is a lithium-ion secondary battery. The battery cell according to the present invention is not limited to the lithium-ion battery and that the battery cell may employ all other types of rechargeable secondary batteries such as a nickel-metal hydride battery cell, a nickel-cadmium battery, a lithium polymer battery, or the like.

In battery block 9, battery cells 1 are disposed in parallel to one another so that the long-side directions of battery cells 1 are along the same direction. Battery cells 1 constituting battery block 9 are connected to one another with lead plates (not shown) connected to end-surface electrodes of both ends of battery cells 1 such that battery cells 1 are arranged to have both the desired number of their parallel connections and the desired number of their series connections. Instead, battery cells 1 may be connected to one another on a circuit board (not shown). In core block 10 shown in FIG. 2, two sets of battery blocks 9 each including ten battery cells 1 are connected to each other, i.e., a total of 20 battery cells are connected in multiple parallel and multiple series. However, in core block 10, the number of battery cells 1 and their connection mode may be changed arbitrarily.

### Battery Holder 2

Battery holder 2 includes insertion tubes 21 into which battery cells 1 are inserted, as shown in FIGS. 1 and 2. Insertion tubes 21 have the same shape and made of insulating plastic. Insertion tubes 21 hold battery cells 1 at their respective predetermined positions at which battery cells 1 are set. In the case that battery cell 1 is a cylindrical battery, battery holder 2 shown in the figure includes insertion tubes 21 with shapes each allowing battery cell 1 to be inserted thereinto and to be held at its predetermined position. The present invention does not necessarily specify the battery cell to be the cylindrical battery. For example, the battery cell may be a rectangular battery. In a battery pack which includes battery cells being rectangular batteries, insertion tubes of battery holders have rectangular tubular shapes.

Battery holder 2 shown in FIG. 1 holds battery cells 1 disposed in a posture of a staggered row arrangement as follows: Ten battery cells 1 are arranged in three stages in the up-and-down direction in the Figure. In the arrangement, three battery cells are in a row of the upper stage, four battery cells in a row of the mid stage, and three battery cells are in a row of the lower stage. These battery cells are disposed in the staggered row arrangement in which each of battery cells 1 in the rows of the upper and lower stages is arranged in a corresponding one of valleys between laterally-adjacent battery cells 1 in the row of the mid stage.

Battery holder 2 includes insertion tubes 21, as shown in FIGS. 1 and 2, into which battery cells 1 are inserted in parallel to one another. Each insertion tube 21 has both end openings from which the end-surface electrodes of the cylindrical battery having inserted into the insertion tube, thereby allowing a lead plate to be connected to the end-surface electrodes. However, the battery holder may include a pair of cell holders divided into two or, alternatively, into three or more.

Battery pack 100 may further include heat-resistant plate 15 stacked between battery blocks 9 stacked on each other, as indicated by a broken line shown in FIG. 2. Heat-resistant plate 15 may be made of an inorganic plate made of as mica or a metal plate. Especially, mica is highly flame-retardant and non-combustible, excellent in insulating properties, and relatively inexpensive; therefore, it is suited for members that require heat resistance and insulating properties. Heat-resistant plate 15 has high heat resistance so that it does not burn and melt even when subjected to high-temperature exhaust gases and flames ejected from battery cells 1, which in turn prevents the exhaust gases and flames from penetrating heat-resistant plate 15 and directly blowing other battery cells 1 of battery block 9 that faces the battery block in question.

### Casing 3

Casing 3 includes, as shown in FIG. 2, heat-dissipating case 4 with both end openings and a pair of closing parts 5 that close the end openings of heat-dissipating case 4. In casing 3, the pair of closing parts 5 are fastened with fastening members 8 in a state of core block 10 having been inserted into heat-dissipating case 4, thereby attaching the pair of closing parts 5 to the both ends of heat-dissipating case 4 from both sides so as to close the both ends.

### Heat-dissipating Case 4

Heat-dissipating case 4 includes tubular part 6 and heat-absorbing fins 7. Tubular part 6 accommodates core block 10 disposed inside the tubular part, and has a tubular shape made of metal. Heat-absorbing fins 7 made of metal are disposed in rows and thermally coupled to an inner surface of tubular part 6, and protrude to an inside of tubular part 6 from tubular part 6 and extend along an axial direction of tubular part 6. In heat-dissipating case 4 shown in the figures, tubular part 6 is unitarily formed with heat-absorbing fins 7 protruding inside tubular part 6 in rows and made of metal. However, in the heat-dissipating case, the heat-absorbing fins disposed in rows may be members separate from the tubular part, and are integrally connected to the inner surface of the tubular part by welding or the like.

Tubular part 6 shown in the schematic transverse cross-sectional view of FIG. 1 and the schematic exploded perspective view of FIG. 2 has a tubular shape formed by connecting a pair of opposing plates 6A opposite to each other, at the both sides, with side plates 6B. The tubular shape has a cross section in which longitudinal width (W1) in the long-side direction is larger than lateral width (W2) in the short-side direction. Heat-dissipating case 4 includes a pair of heat-absorbing fins 7 disposed inside heat-dissipating case 4. Each of the pair of heat-absorbing fins 7 extending inward from a corresponding one of the opposing plates 6A. In heat-dissipating case 4 shown in the figures, heat-absorbing fins 7 and tubular part 6 are unitarily formed with one another into a one-piece structure by extrusion or pultrusion molding of metal such as aluminum. Heat-absorbing fin 7 has an elongated plate shape that extends from one end of heat-dissipating case 4 to the other end, thereby allowing heat-absorbing fins 7 to efficiently absorb the thermal energy, i.e., the heat inside the casing and to thermally conduct the heat to tubular part 6 where the heat is dissipated.

In addition to absorbing and dissipating thermal energy inside casing 3, heat-absorbing fins 7 are also used as ducts 11 configure to guide exhaust gases ejected from battery cells 1. In heat-dissipating case 4, heat-absorbing fins 7 are combinedly used as ducts 11 and side plates 6B as well are combinedly used as ducts 11, which allows ducts 11 configured to guide exhaust gases to be constituted in a simple shape, without forming any members for exclusively constituting ducts 11. Heat-dissipating case 4 includes ducts 11 for exhaust gases is configured to guide, into ducts 11, the exhaust gases of high temperatures and pressures, which are ejected from battery cells 1 undergoing thermal runaway, thereby preventing other battery cells 1 from inducing thermal runaway.

Heat-dissipating case 4 shown in FIGS. 1 and 2 includes ducts 11, into which exhaust gases from battery cells 1 are caused to flow, provided between the inner surface of tubular part 6 and each heat-absorbing fin 7. In heat-dissipating case 4 shown in the figures, that plate shaped heat-absorbing fins 7 extending along the inner sides of side plates 6B are disposed to constitute ducts 11 between side plates 6B and heat-absorbing fins 7, and slit 12 is provided between a pair of heat-absorbing fins 7 coupled to respective opposing plates 6A. The pair of heat-absorbing fins 7 are disposed at positions opposite to each other with respect to slit 12. Each of heat-absorbing fins 7 has a first side edge coupled to the inner surface of tubular part 6 in a state of thermal coupling, and has a second side edge serves as an opening edge of a corresponding one of slits 12.

Slits 12 is configured to guide the exhaust gases ejected from battery cells 1 into ducts 11. The opening width of each slit 12 is equal to a gap through which the ejected matter such as exhaust gases ejected from battery cells 1 can be rapidly guided into ducts 11. Although a larger opening width of slit 12 leads to efficient flowing of the exhaust gases ejected from battery cells 1 into ducts 11, such a larger opening gap results in a decrease in amount of protrusion of heat-absorbing fins 7 from the inner surface of tubular part 6 and a decrease in surface areas of heat-absorbing fins 7, thereby reducing their heat absorption efficiency. On the contrary, although a larger amount of protrusion of heat-absorbing fins 7 leads to an increase in surface areas of heat-absorbing fins 7 and thereby an increase in their heat absorption efficiency, it causes a decrease in the opening width of slits 12, resulting in difficulties for the exhaust gases to rapidly flow into ducts 11. Therefore, taking this into consideration, both the amount of protrusion of heat-absorbing fins 7 from tubular part 6 and the opening width of slits 12 are appropriately.

Slits 12 are openings extending in the axial direction of tubular part 6. Since heat-dissipating case 4 accommodates battery blocks 9 stacked on one another therein, the exhaust gases flowing out interstices of core block 10 are caused to flow through the openings of slits 12 into ducts 11, as indicated by the arrow in FIG. 1. Ducts 11 are connected to exhaust openings (not shown) disposed in casing 3 where exhaust gases flowing in the ducts are discharged to the outside. Although not shown, the exhaust openings may be opened in closing parts 5 or opposing plates 6A or, alternatively, may be opened in the coupling portions between closing parts 5 and heat-dissipating case 4. The exhaust openings may be one or more through holes disposed in casing 3 or, alternatively, slit-shaped holes disposed in casing 3. The through holes or slit-shaped holes disposed as the exhaust openings may have a structure in which these holes are closed with gas-liquid separation membranes, rubber valves, etc. which allow gases to pass through them but block liquids and solids.

Heat-dissipating case 4 shown in FIG. 1 has the configuration in which each side plate 6B is arcuately curved and each heat-absorbing fin 7 is curved along a corresponding side plate 6B, so that each of ducts 11 gradually narrows as closer to both side edges of the duct. Heat-dissipating case 4 has advantages as follows: Since plate-shaped heat-absorbing fins 7 extending inward from respective opposing plates 6A are disposed at the positions opposite to each other, it is possible to increase the heat-absorption area by increasing the substantial amount of protrusion of heat-absorbing fins 7, resulting in efficiently absorbing the thermal energy generated inside heat-dissipating case 4. Moreover, in heat-dissipating case 4 shown in FIG. 1, heat-absorbing fin 7 has a curved shape causes the inner width of ducts 11 to gradually narrow as closer from slits 12 to the coupling portions with opposing plates 6A. This configuration allows the exhaust gases to flow through narrow ducts 11, thereby providing the effect of decreasing the energy of the exhaust gases of high temperatures and pressures. This is because narrower ducts 11 subject the exhaust gases to greater passing resistance, which decreases the flow velocity of the exhaust gases, resulting in a decrease in kinetic energy of the exhaust gases.

Further, heat-dissipating case 4 shown in FIG. 1 includes four ducts 11 constituted at regions on both side portions of tubular part 6 substantially rectangular in a transverse cross-sectional view, with the regions including four corners of tubular part 6. Each of slits 12 is constituted between a pair of heat-absorbing fins 7 disposed at a corresponding one of both side portions of heat-dissipating case 4, so that the exhaust gases ejected from battery cell 1 are diverged to and flow through slits 12 into ducts 11 on both sides. Heat-dissipating case 4 with the structure of this type causes the exhaust gases having passed through slits 12 to collide with the inner surfaces of side plates 6B, thereby decreasing the energy of the exhaust gases before being guided to ducts 11 on both sides. This configuration decreases the energy of the exhaust gases of high temperatures and pressures, which have been vigorously ejected from battery cells 1, and guides the exhaust gases into ducts 11, and then discharges the exhaust gases to the outside. Moreover, since ducts 11 are constituted on both sides of heat-dissipating case 4, casing 3 includes core block 10 accommodated in tubular part 6. Core block 10 is capable of discharging the exhaust gases to the both sides. This configuration allows the exhaust gases from battery cell 1 undergoing thermal runaway to be smoothly guided to ducts 11 and then discharged to the outside.

Heat-dissipating case 4 shown in FIGS. 1 and 2 is manufactured by unitarily forming tubular part 6 and heat-absorbing fins 7 in a one-piece structure by extrusion or pultrusion molding of metal. Heat-dissipating case 4 described above has advantages as follows: Since metal is extruded or pultruded from a die to unitarily form both tubular part 6 and heat-absorbing fins 7 in a one-piece structure, heat-dissipating case 4 having the same transverse cross-sectional shape over the whole region thereof is efficiently mass-produced with a metal such as aluminum. Heat-dissipating case 4 formed by extrusion or pultrusion molding is preferably made of aluminum (including aluminum alloys) in a one-piece structure. In addition to the advantages of being efficiently mass-produced by extrusion or pultrusion molding, heat-dissipating case 4 made of aluminum has other advantages of being capable of efficiently dissipating the thermal energy of the battery cells attributed to excellent heat conduction characteristics of aluminum. However, the metal for molding heat-dissipating case 4 is not limited to aluminum. Other materials, such as magnesium or its alloys, for example, which can be subjected to extrusion or pultrusion molding to form both tubular part 6 and heat-absorbing fins 7 in a one-piece structure, may also be used.

### Closing Part 5

Closing parts 5 with plate shapes close both end openings of heat-dissipating case 4, and have outer shapes that follow the outer shape of heat-dissipating case 4. Each of closing parts 5 shown in FIG. 2 includes low-profile peripheral wall 5b along the outer peripheral edge thereof so as to be connected to the opening edge of heat-dissipating case 4 in a fitting structure. Closing part 5 shown in the figures has a structure in which the inner shape of peripheral wall 5b follows the outer shape of heat-dissipating case 4, so that closing part 5 may be connected to heat-dissipating case 4 while positioning heat-dissipating case 4. However, the closing part does not necessarily include the peripheral wall. Instead, the closing part may have a recess or groove therein configured to guide the opening end of the heat-dissipating case or, alternatively, include a projection to be inserted into the opening of the heat-dissipating case, allowing the closing part to be connected while being positioned with respect to the heat-dissipating case. By connecting closing parts 5 to heat-dissipating case 4 while positioning closing parts 5 with respect to the both end openings of heat-dissipating case 4, casing 3 is appropriately closed in a state of the outer peripheral edges of closing parts 5, fastened with fastening members 8, contacting the end openings of heat-dissipating case 4. Moreover, closing part 5 shown in the figures has through-holes 5a configured to have fixing screws 14 inserted therein, which will be described later.

Although not shown, closing part 5 may further include a discharging connector configured to discharge accommodated battery cells 1 and a charging connector configured to charge accommodated battery cells 1. Closing part 5 may further include an indicator, on the surface thereof, that is configured to indicate a remaining capacity and the like of battery pack 100. For example, the indicator may indicate the remaining capacity of the battery pack by, e.g., the lighting status of a light source such as an LED.

### Heat-dissipating Rod 13

Casing 3 shown in the cross-sectional view of FIG. 1 includes heat-dissipating rods 13 disposed between heat-absorbing fins 7 and battery cells 1 accommodated in battery holder 2. Heat-dissipating rods 13 extend in the axial direction of tubular part 6. Heat-dissipating rods 13 are metal rods made of, e.g., aluminum and are inserted into through-holes 22 provided in battery holder 2, thereby being disposed at predetermined positions in core block 10. In each heat-dissipating rod 13 shown in the figure, the both ends of heat-dissipating rod 13 are connected to closing parts 5 such that the both ends of heat-dissipating rod 13 are thermally coupled to closing parts 5. This configuration allows the thermal energy having been absorbed by heat-dissipating rod 13 to be thermally conducted to closing parts 5, resulting in more effective heat dissipation. Advantageously, since heat-dissipating rod 13 per se absorbs thermal energy, heat-dissipating rod 13 prevents temperature rise by absorbing thermal energy even without being thermally coupled to closing parts 5. Further, heat-dissipating rod 13 shown in the figure also serves as fastening member 8 that fastens closing parts 5 to heat-dissipating case 4. Heat-dissipating rod 13 has, in the both ends thereof, threaded holes 13a into which fixing screws 14 are screwed and fixed, so that fixing screws 14 penetrating respective closing parts 5 are screwed into respective threaded holes 13a, thereby fixing closing parts 5 to heat-dissipating case 4.

### Fastening Member 8

Fastening members 8 fasten a pair of closing parts 5, so that heat-dissipating case 4 is sandwiched between and fixed by the pair of closing parts 5 from both sides of heat-dissipating case 4. Fastening members 8 fasten the pair of closing parts 5, for example, via core block 10 accommodated in casing 3. Fastening members 8 shown in FIG. 2 are heat-dissipating rods 13 inserted into battery holder 2 of core block 10, and fixing screws 14 penetrating closing part 5 to be screwed into respective threaded holes 13a provided in the both ends of heat-dissipating rods 13. However, the fastening members may not be limited to the structure described above. Instead, the fastening members may be fixing screws that penetrate both of the closing parts and the core block of batteries and are screwed into the other of the closing parts. Alternatively, the fastening members may also be composed of coupling rods that penetrate both a pair of the closing parts and the core block of batteries, and nuts that are screwed onto threaded portions at both ends of the respective coupling rods. These fastening members may allow the metal rods inserted into the through holes disposed in the battery holder of the core block to also function as heat-dissipating rods.

Further, the fastening members do not necessarily penetrate core block 10. For example, a pair of closing parts 5 may also be fastened to heat-dissipating case 4 via heat-absorbing fins 7 and tubular part 6, both located between the pair. The fastening members may also be fixing screws, for example, that penetrate the respective closing parts and are screwed into screw holes that are formed in, e.g., fixing ribs and bosses which are disposed in the heat-absorbing fins and tubular part.

Here, fastening members 8 are members for coupling a pair of closing parts 5 to each other and thereby sandwiching heat-dissipating case 4 between the closing parts 5 from both sides of heat-dissipating case 4. In the case where core block 10 is composed of divisible battery blocks 9, fastening members 8 may include members for coupling battery blocks 9 into a one-piece body. Therefore, as an example, fastening members 8 may also be composed of both connectors for coupling battery blocks 9 and fixtures for fixing closing parts 5 to core block 10. However, the members for coupling battery blocks 9 are not necessary in cases where core block 10 is configured with one battery block, or in cases where battery blocks 9 constituting core block 10 is integrally fixed via battery holder 2. Therefore, in these cases, the connectors are omitted, and a pair of the closing parts are fixed directly to the core block. Examples of the fastening members in these cases include fixtures for fixing the closing parts to the core block, such as fixing screws or rivets.

### Exemplary Embodiment 2

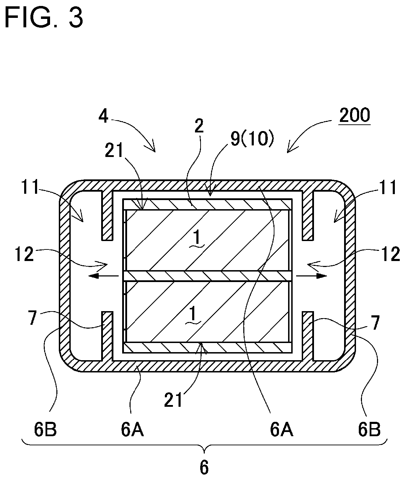

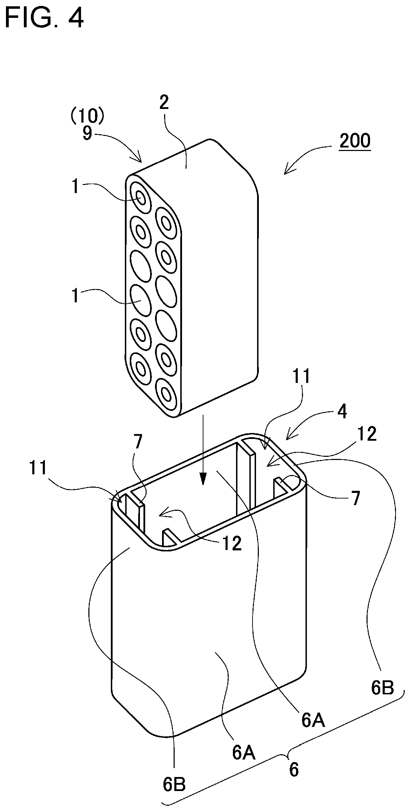

The battery pack may have the structure shown in FIGS. 3 and 4. In heat-dissipating case 4 of battery pack 200 shown in these figures, both opposing plates 6A and side plates 6B are planar, and tubular part 6 thus has substantially a rectangular cross-section. As in heat-dissipating case 4 of Embodiment 1, heat-dissipating case 4 shown in these figures is manufactured by unitarily forming tubular part 6 and heat-absorbing fins 7 in a one-piece structure by extrusion or pultrusion molding. Each of heat-absorbing fins 7 of heat-dissipating case 4 shown in these figures has a plate shape extending in a direction perpendicular to the inner surfaces of opposing plates 6A. Heat-absorbing fins 7 are disposed parallel to side plates 6B, thereby constituting ducts 11 between heat-absorbing fins 7 and side plates 6B. Slit 12 is provided between a pair of heat-absorbing fins 7 that are formed unitarily with opposing plates 6A opposite to each other into a one-piece structure. Slits 12 guide, into ducts 11, the ejected matter such as exhaust gases ejected from battery cells 1. As in casing 3 of Embodiment 1, ducts 11 are connected to exhaust openings through which the exhaust gases having flown into the ducts are discharged to the outside. In the illustrations of battery pack 200 in FIGS. 3 and 4, closing parts 5 are omitted.

Battery pack 200 shown in FIGS. 3 and 4 accommodates battery cells 1 such that battery cells 1, in a horizontal posture in the figures, are arranged parallel to one another along the long-side direction of heat-dissipating case 4 in the transverse cross section of heat-dissipating case 4. Battery cells 1 are disposed at predetermined positions in battery holder 2 accommodating insertion tubes 21 in a horizontal posture, thereby constituting core block 10 to be accommodated in heat-dissipating case 4. Core block 10 shown in the figures includes one set of battery blocks 9. Battery holder 2 shown in FIG. 4 accommodates 12 battery cells 1 arranged in two rows on the left and right, as one example, each of the rows includes six battery cells stacked in six stages in the up-and-down direction. Battery holder 2 has the structure in which the exhaust gases ejected from battery cells 1 flow into slits 12. Since each of battery cells 1 includes a discharge valve on one end thereof for ejecting ejected matter, the ejected matter ejected from battery cell 1 flows from slit 12 into duct 11, as indicated by the arrows, and then, is discharged to the outside. In battery pack 200 having this configuration, since battery cells 1 eject the exhaust gases toward slits 12 (in the horizontal direction in the figure) provided between heat-absorbing fins 7, the exhaust gases are rapidly guided into ducts 11 and discharged to the outside.

Heat-dissipating case 4 shown in FIGS. 3 and 4 has slits 12 at locations that face discharge valves (not shown) disposed in the end-surface electrodes of battery cells 1 in order to facilitate the flowing of the ejected matter such as exhaust gases ejected from battery cells 1 into ducts 11. Each of slits 12 is preferably provided over the area facing the whole or a part of the discharge valves to facilitate guiding the exhaust gases from the discharge valves of battery cells 1. In battery pack 200 shown in FIG. 3 which accommodates battery cells 1 in two rows on the left and right, slits 12 are provided in the middle portion between battery cells 1 disposed on the left and battery cells 1 disposed on the right, and have an opening width capable of opening about 1/2 of the area of each of the end-surface electrodes of battery cells 1 on the left and right. Even in heat-dissipating case 4, as in the case described above, taking both the heat absorption efficiency of heat-absorbing fins 7 and the discharge efficiency of slits 12 for exhaust gases into consideration, both the amount of protrusion of heat-absorbing fins 7 from tubular part 6 and the opening width of slits 12 are appropriately designed.

### Exemplary Embodiment 3

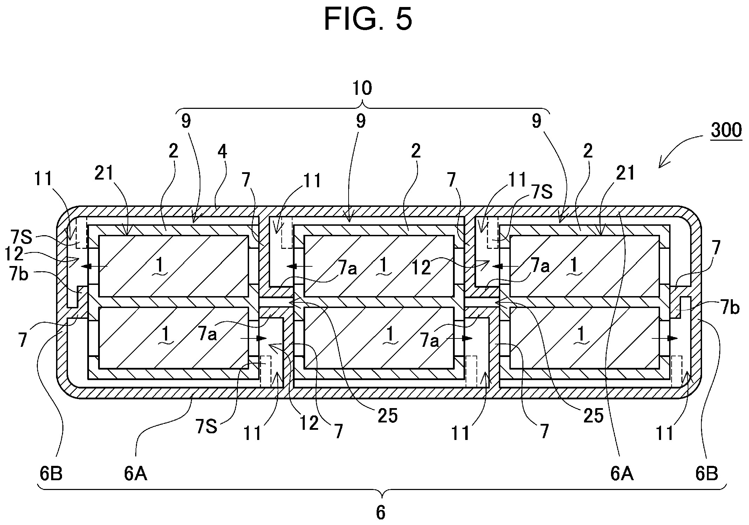

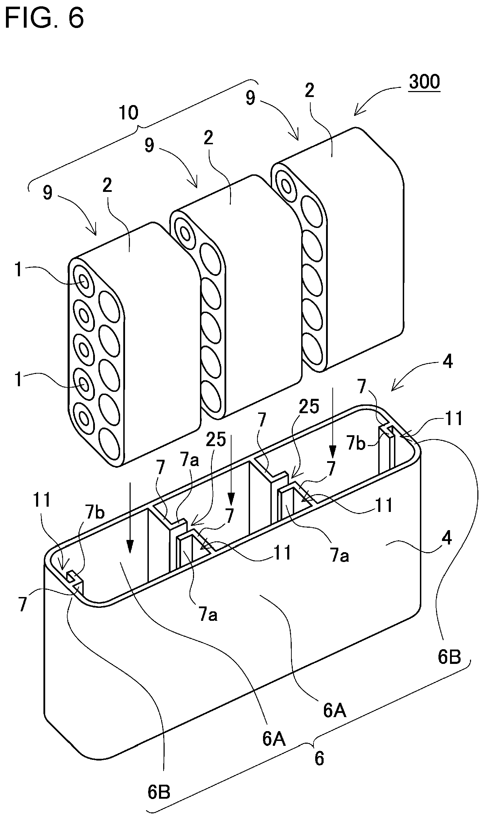

In battery pack 300 shown in FIGS. 5 and 6 is, as in the case of battery holder 2 shown in FIG. 4, each of battery blocks 9 includes battery cells 1 accommodated in a horizontal posture, and are arranged in the longitudinal direction (the axial direction of battery cells 1) of tubular part 6 and accommodated in heat-dissipating case 4. In the illustrations of battery pack 300 in FIGS. 5 and 6, closing parts 5 are omitted.

In heat-dissipating case 4 shown in the figures, heat-absorbing fins 7 are disposed between battery blocks 9. In the structure of heat-dissipating case 4 shown in the figures, the transverse cross-sectional shape of tubular part 6 is substantially rectangular and tubular part 6 accommodates three battery blocks 9 arranged in a line in the longitudinal direction in the transverse cross section. In the structure, pairs of heat-absorbing fins 7 are disposed between battery blocks 9. Each of the pair of heat-absorbing fins 7 protrudes from the inner surface of a corresponding one of opposing plates 6A opposite to each other, and thus adjacent battery blocks 9 are partitioned from each other by a corresponding one of the pairs of heat-absorbing fins 7. Heat-dissipating case 4 includes facing gaps 25 each of which is provided between paired heat-absorbing fins 7. Each of the pair of heat-absorbing fins 7 has a first side edge and a second side edge. The first side edge is connected to the inner surface of a corresponding one of opposing plates 6A, and the end portion on the second side edge side is bent to form bent section 7a. This constitutes facing gap 25 between bent sections 7a opposite to each other. Further, each of heat-absorbing fins 7 constitutes duct 11 between bent section 7a formed at the end portion on the second side edge side and the inner surface of tubular part 6. Duct 11 allows the ejected matter ejected from battery cells 1 to flow through it. The pair of heat-absorbing fins 7 are arranged point-symmetrically in a transverse cross-sectional view by bending their bent sections 7a in opposite directions to each other.

In addition, heat-dissipating case 4 shown in the Figures is provided with heat-absorbing fins 7 that protrude from the inner surfaces of side plates 6B opposite to each other. They also constituting ducts 11 between side plates 6B and respective battery blocks 9 facing side plates 6B. Each of heat-absorbing fins 7 protruding from the inner surfaces of side plates 6B has a first side edge and a second side edge. The first side edge is connected to the inner surface of a corresponding one of opposing plates 6B, and the tip portion on the second side edge side is bent to form bent section 7b. Bent section 7b is in surface contact with the end surface of a corresponding one of battery blocks 9. Heat-absorbing fin 7 in question constitutes duct 11 between heat-absorbing fin 7 and a corresponding one of opposing plates 6A. The ejected matter ejected from battery cells 1 flows through duct 11. Besides, heat-absorbing fin 7 also constitutes narrow duct 11 having a closed end between a corresponding one of opposing plates 6B and bent section 7b.

As indicated by broken lines in FIG. 5, heat-dissipating case 4 may include sub-heat absorbing fins 7S opposite to the end surface of battery holder 2 facing the discharge valve of battery cells 1. Sub-heat absorbing fins 7S are connected to respective opposing plates 6A and protrude perpendicularly from respective opposing plates 6A. This structure constitutes narrow ducts 11 having a closed end between heat-absorbing fins 7 and sub-heat absorbing fins 7S, and thereby configured to cause the exhaust gases ejected from battery cells 1 to flow into narrow ducts 11, resulting additionally in the effect of decreasing the kinetic energy of the exhaust gases. Further, according to the structure, slits 12 may be provided between the tip edges of sub-heat absorbing fins 7S and bent sections 7a and 7b of heat-absorbing fins 7. This configuration controls the flowing of the exhaust gases into ducts 11 by adjusting the opening widths of slits 12.

Battery pack 300 as well shown in the figures accommodates therein battery cells 1 such that battery cells 1 are in a horizontal posture and that battery cells 1 are arranged parallel to one another along the longitudinal direction of heat-dissipating case 4 in the transverse cross section of heat-dissipating case 4. Battery cells 1 are disposed at predetermined positions in battery holder 2 accommodating insertion tubes 21 in a horizontal posture, thereby constituting core block 10 to be accommodated in heat-dissipating case 4. Each of battery blocks 9 is disposed such that the ejected matter ejected from battery cells 1 flows into duct 11 provided at the location facing battery block 9. Each battery block 9 shown in FIG. 6 accommodates battery cells 1 arranged in two rows on the left and right, and each of the rows includes battery cells 1 stacked in multiple stages in the up-and-down direction. Then, battery cells 1 arranged in the up-and-down direction are directed in the same orientation. In general, since each battery cell 1 in ludes a discharge valve in one of end-surface electrodes of battery cell 1 (the protrusion electrode in the figure), battery cell 1 is accommodated such that the end surface including the discharge valve is positioned at the location facing duct 11 of heat-dissipating case 4. That is, in battery pack 300 shown in FIG. 5, ducts 11 are constituted as follows: That is, for battery cells 1 disposed on the upper side in the figure, since the ejected matter is ejected from the end surfaces to the left as indicated by the arrows, ducts 11 are provided at the locations that face the end surfaces in question on their ejection side. For battery cells 1 disposed on the lower side in the figure, since the ejected matter is ejected from the end surfaces to the right as indicated by the arrows, ducts 11 are provided at the locations that face the end surfaces in question on their ejection side. Heat-dissipating case 4 with this shape as well can achieve the advantages of effective heat dissipation of the ejected matter, such as exhaust gases, attributed to heat-absorbing fins 7 protruding from the inner surface of tubular part 6.

### Exemplary Embodiment 4

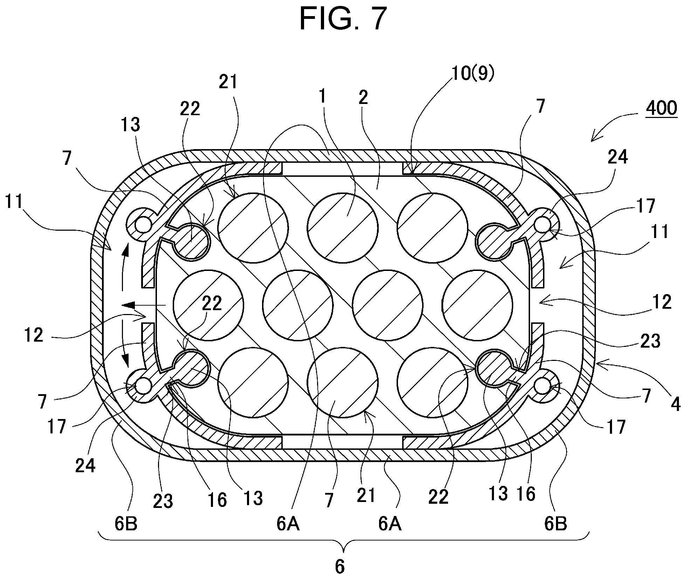

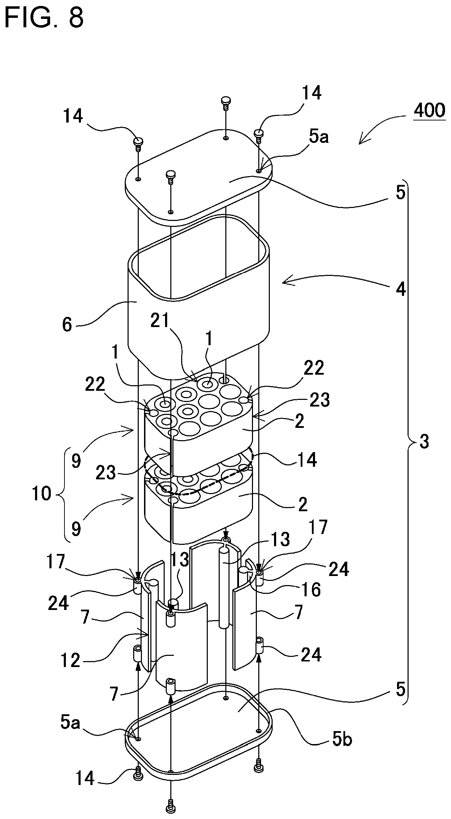

Battery pack 400 shown in FIGS. 7 and 8 has the structure in which heat-absorbing fins 7 are members separate from tubular part 6 and connected to closing parts 5. Heat-absorbing fins 7 shown in the figures includes four curved plates disposed along four corners of core block 10. The four curved plates are connected at their both ends to a pair of closing parts 5 with fixing screws 14 that penetrate closing parts 5. In battery pack 400, closing parts 5 are connected to tubular part 6, thereby allowing heat-absorbing fins 7 to be disposed at locations where heat-absorbing fins 7 are thermally coupled to the inner surface of tubular part 6 via closing parts 5. Each heat-absorbing fins 7 being the curved plate has a first side edge and a second side edge. The first side edge is connected to the inner surface of tubular part 6 such that the first side edge is thermally coupled to the inner surface of tubular part 6. The second side edge is disposed in a state of being away from the inner surface of tubular part 6. Slit 12 is provided between the second side edges opposite to each other. Duct 11 is provided between the inner surface of tubular part 6 and a pair of heat-absorbing fins 7 that constitute slit 12.

Further, heat-absorbing fins 7 shown in the figures are connected to heat-dissipating rods 13 such that heat-absorbing fins 7 are thermally coupled to heat-dissipating rods 13, are inserted into through holes 22 provided in battery holder 2. Heat-absorbing fins 7 shown in the figures have a curved shape along four corners of battery holder 2 and extend in the axial direction of tubular part 6. Then, each of heat-absorbing fins 7 is unitarily formed with and coupled to a corresponding one of heat-dissipating rods 13 to be inserted into through holes 22 disposed in battery holder 2. Heat-absorbing fin 7 shown in FIG. 7 is integrally connected to heat-dissipating rod 13 via coupling part 16. For the insertion, into through hole 22, of each of heat-dissipating rod 13 having been coupled to heat-absorbing fin 7, in battery holder 2, the peripheral wall of through-hole 22 is partially cut away in the axial direction to constitute insertion slit 23 configured to guide coupling part 16 through insertion slit 23.

The unitarily connected structure of heat-absorbing fin 7 and heat-dissipating rod 13 described above allows heat-absorbing fin 7 to be disposed at a predetermined position in battery holder 2 in a state of heat-dissipating rod 13 having been inserted into through hole 22 of battery holder 2. This configuration provides advantages that heat-absorbing fins 7 are connected to closing parts 5 in a state of being disposed at the respective fixed positions. Here, casing 3 shown in the figures has the structure in which fixing screws 14 are screwed into threaded holes 17 disposed at both ends of each of heat-absorbing fins 7. Each of heat-absorbing fins 7 shown in the figures includes threaded holes 17 formed in tubular bodies 24 that are connected to the outer surface of heat-absorbing fin 7 by welding or the like. Although not shown, the heat-absorbing fin may have threaded holes therein such that the heat-absorbing fin includes thick portions, projections, or the like and the end surfaces of which are bored and thread to form the threaded holes. However, one end of heat-absorbing fin 7 may be fixed to closing part 5 by welding or the like. In this structure, in a state of four heat-absorbing fins 7 having been fixed to closing part 5 at the respective fixed positions, core block 10 is disposed between heat-absorbing fins 7 having been fixed to closing part 5 so as to be thermally coupled to heat-absorbing fins 7. As described above, closing part 5 connected to heat-absorbing fins 7 provide, due to metal as a material of the whole or a part (e.g., a part to which heat-absorbing fins 7 are coupled) of closing part 5, advantages of effective heat dissipation of thermal energy absorbed by heat-absorbing fins 7.

Battery pack 400 shown in the figures has the structure in which heat-dissipating rods 13 are thermally coupled to heat-absorbing fins 7, thereby resulting in efficient absorption, by heat-dissipating rods 13, of the thermal energy of battery cells 1 that generate heat. Although heat-dissipating rods 13 per se absorb the thermal energy to prevent temperature rise of the battery cells and exhaust gases, the thermal coupling of heat-dissipating rods 13 to heat-absorbing fins 7 allows the thus-absorbed thermal energy to be thermally conducted through heat-absorbing fins 7 to tubular part 6 and closing parts 5, resulting in more effective heat dissipation to the outside.

Further, in battery pack 400, heat-absorbing fins 7 thermally coupled to core block 10 are inserted together with core block 10 into tubular part 6, thereby being connected to the inner surface of tubular part 6 such that heat-absorbing fins 7 are thermally coupled to tubular part 6. In battery pack 400, after core block 10 connected to heat-absorbing fins 7 has been inserted into tubular part 6, the other of closing parts 5 is fixed to the tips of heat-absorbing fins 7, thereby closing the both ends of tubular part 6 with a pair of closing parts 5. Heat-absorbing fins 7 are fixed to closing parts 5 with fixing screws 14 that pass through closing parts 5 and screwed into threaded holes 17 provided in the both ends of heat-absorbing fins 7. This configuration allows heat-absorbing fins 7 to also function as fastening members 8 that fasten a pair of closing parts 5 so that the pair of closing parts 5 close the both end openings of heat-dissipating case 4. However, the heat-absorbing fins are not necessarily directly fixed to the closing parts. Alternatively, threaded holes may be provided in the both ends of the heat-dissipating rods connected to the heat-absorbing fins, and the heat-absorbing fins may be fixed to the closing parts via fixing screws screwed into the threaded holes.

Battery pack 400 described above includes tubular part 6 and heat-absorbing fins 7 as members separate from one another. Therefore, closing parts 5 are fixed to tubular part 6 in a state of heat-absorbing fins 7 having been inserted into tubular part 6, which allows heat-absorbing fins 7 to be disposed at predetermined positions in tubular part 6 such that heat-absorbing fins 7 are thermally coupled to tubular part 6. Battery pack 400 assembled in this state described above provides the following advantages. Tubular part 6 is inexpensively mass-produced because of its simple shape without including heat-absorbing fins 7. Core block 10 is smoothly inserted into tubular part 6, resulting in simplified assembling steps thereof. In addition, the structure in which heat-absorbing fins 7 are coupled to closing parts 5 allows heat-absorbing fins 7 to be connected to closing parts 5 such that heat-absorbing fins 7 are thermally coupled to closing parts 5, which also results in a state of preferable heat conduction from the heat-absorbing fins 7 to closing parts 5, leading to efficient heat dissipation.

### Exemplary Embodiment 5

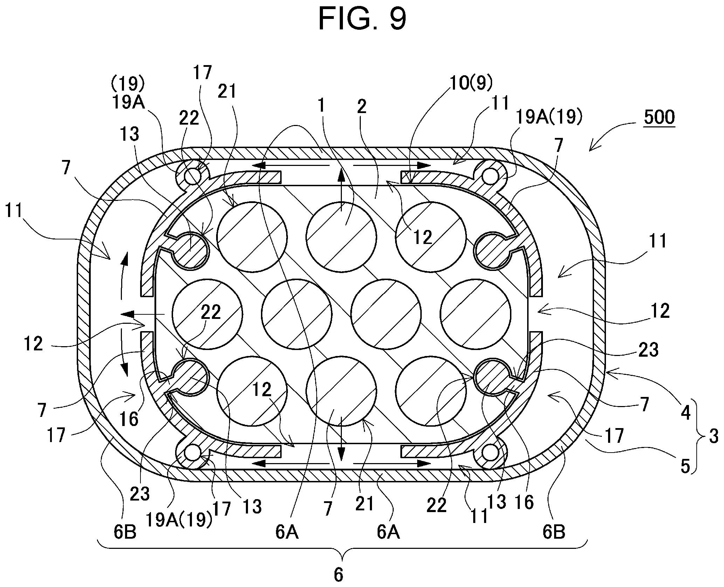

In battery pack 500 shown in FIG. 9, as in battery pack 400 of Embodiment 4 described above, heat-absorbing fins 7 and tubular part 6 are members separate from one another and are connected to closing parts 5. In addition, ducts 11 are provided between opposing plates 6A of tubular part 6 and heat-absorbing fins 7. In heat-dissipating case 4 shown in FIG. 9, heat-absorbing fins 7 face the inner side of tubular part 6 while the end portions on the first side edge side of heat-absorbing fins 7 are away from opposing plates 6A without the first side edges of heat-absorbing fins 7 being in contact with the inner surface of tubular part 6 thereby providing ducts 11 between respective opposing plates 6A and respective heat-absorbing fins 7.

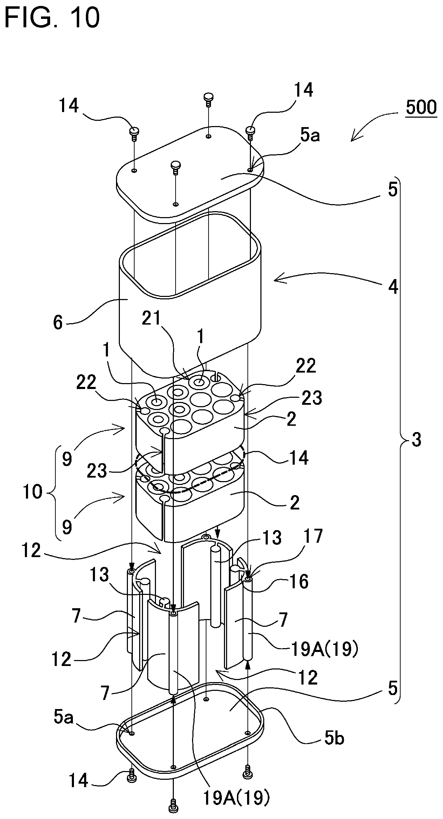

Each of heat-absorbing fin 7 shown in the figure includes contact projection 19 at the middle portion thereof. Contact projection 19 extends in the axial direction. Contact projection 19 is connected to the inner surface of tubular part 6 to be thermally coupled to the inner surface of tubular part 6. Contact projection 19 shown in the figure is columnar projection strip 19A that extends to the both ends of heat-absorbing fin 7 as shown in FIG. 10. Projection strip 19A is unitarily connected to the surface of heat-absorbing fin 7, in a state of protruding outward from the surface of heat-absorbing fin 7. Contact projection 19 is thermally coupled to tubular part 6, in a state of being in contact with the inner surface of opposing plate 6A of tubular part 6 in the figures. Heat-absorbing fin 7 is connected to tubular part 6 to be thermally coupled to tubular part 6 via contact projection 19 disposed outside the mid portion of heat-absorbing fin 7. Then, the end portion of heat-absorbing fin 7 on the first side edge of heat-absorbing fin 7 is away from opposing plate 6A to constitute duct 11 between heat-absorbing fin 7 and opposing plate 6A, and the end portion of heat-absorbing fin 7 on the second side edge side of heat-absorbing fin 7 is disposed away from side plate 6B to constitute duct 11 between heat-absorbing fin 7 and side plate 6B. At the center portion of the inner surface of opposing plate 6A, slit 12 is provided between the first side edges of adjacent heat-absorbing fins 7. Heat-dissipating case 4 with this structure includes ducts 11 inside side plates 6B located at the both ends in the long-side direction in the transverse cross section; besides, heat-dissipating case 4 includes ducts 11 inside opposing plates 6A extending in the longitudinal direction. In this way, the structure in which four ducts 11 are provided along the four side of heat-dissipating case 4 allows the ejected matter ejected from battery cells 1 to flow through slits 12 provided around the cells to ducts 11, which results in quick discharge of the ejected matter to the outside. This configuration effectively prevents thermal damage caused by the ejected matter such as high temperature and pressure exhaust gases.

Contact projection 19 shown in FIG. 10 has a columnar shape extending in the axial direction of heat-absorbing fin 7, and is in contact with and thermally coupled to the inner surface of tubular part 6 over the region of its extension in the axial direction. Contact projection 19 shown in the figures has threaded holes 17 in both ends thereof by boring and threading, which allows closing parts 5 to be connected by screwing fixing screws 14 into screw holes 17. That is, contact projection 19 also functions as fastening members 8 that fasten a pair of closing parts 5 so that the pair of closing parts 5 close the both end openings of heat-dissipating case 4. Although the contact projection shown in the figures is unitarily formed with the heat-absorbing fin by extrusion or pultrusion molding, the contact projection may be formed by connecting a columnar metal rod or pipe to the surface of the heat-absorbing fin by welding or the like.

Contact projections 19 shown in FIGS. 9 and 10 are projection strips 19A with columnar shapes in the transverse cross section, and provides advantages of small contact resistance with the inner surface of tubular part 6 when inserting heat-absorbing fins 7 connected to core block 10 into the inside of tubular part 6, resulting in their smooth insertion. However, contact projections 19 may be changed such that projection strips 19A have any of various columnar shapes in the transverse cross section. In this case, a columnar shape capable to be connected in a state of surface contact to the inner surface of tubular part 6, may also be used to achieve efficient heat conduction. Further, although not shown, regardless of the shape of projection strips 19A, in order to improve the state of contact to the inner surface of tubular part 6 and thereby to improve the heat conduction from heat-absorbing fins 7 to tubular part 6, heat conductive grease may be applied between projection strips 19A and tubular part 6, or heat conductive sheets may be provided between projection strips 19A and tubular part 6.

Battery pack 500 described above includes ducts 11 provided between heat-absorbing fins 7 and both opposing plates 6A and side plates 6B of tubular part 6 in such a manner as follows: Heat-absorbing fins 7 are inserted into tubular part 6, and both end openings of heat-dissipating case 4 are closed with a pair of closing parts 5. This configuration allows contact projections 19 of heat-absorbing fins 7 to be in contact with the inner surface of tubular part 6, and cause heat-absorbing fins 7 to be disposed and thermally coupled to tubular part 6, thereby constituting ducts 11. Battery pack 500 provides advantageous effects that tubular part 6 is inexpensively mass-produced because of its simple shape, and that heat-absorbing fins 7 and core block 10 are smoothly inserted into tubular part 6, resulting in simplified assembling steps thereof. Further, the coupling of tubular part 6 and heat-absorbing fins 7 in a state of thermal coupling via contact projections 19 leads to a state of preferable heat conduction from heat-absorbing fins 7 to tubular part 6, thereby resulting in more efficient heat dissipation. Furthermore, ducts 11 provided at the four sides of the tubular part allow the ejected matter to be ideally guided to ducts 11, resulting in preferable heat dissipation regardless of where battery cell 1 undergoing thermal runaway is.

### Exemplary Embodiment 6

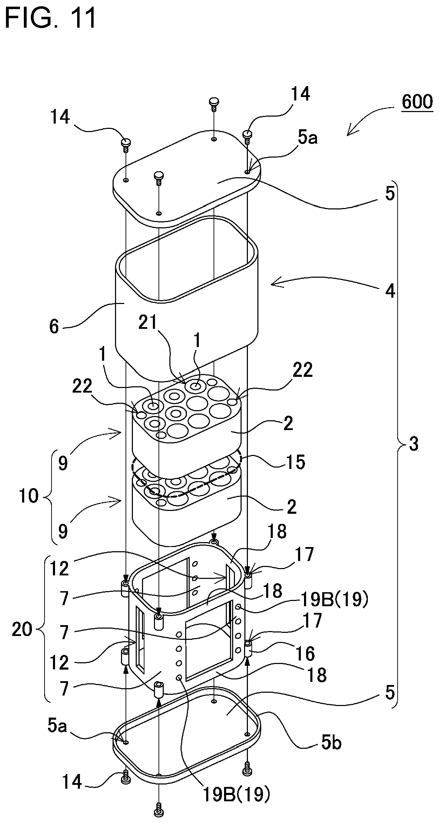

In battery pack 600 shown in FIG. 11, tubular part 6, heat-absorbing fins 7, and closing parts 5 are members separate from one another. In casing 3 shown in the figure, heat-absorbing fins 7 disposed in rows are connected to one another with coupling portions 18 to form fin unit 20, and fin unit 20 is inserted into at a predetermined position in tubular part 6, thereby connecting heat-absorbing fins 7 to tubular part 6 such that heat-absorbing fins 7 are thermally coupled to tubular part 6.

Fin unit 20 shown in the figure is formed in an integrated structure by connecting the upper and lower portions of four heat-absorbing fins 7 to each other with coupling parts 18. Four heat-absorbing fins 7 are disposed along the outsides of the four corners of core block 10. Each of heat-absorbing fins 7 has a first side edge and a second side edge. The first side edge is thermally coupled to the inner surface of tubular part 6. The second side edge is disposed in a state of being away from the inner surface of tubular part 6. Slit 12 is provided between second side edges disposed opposite to each other. A duct is provided between the inner surface of tubular part 6 and each of a pair of heat-absorbing fins 7 that constitute slit 12. In fin unit 20 shown in the figure, each of heat-absorbing fins 7 includes contact projection 19 that is in contact with the inner surface of tubular part 6 such that contact projection 19 is thermally coupled to tubular part 6. In fin unit 20 shown in the figure, contact projection 19 is composed of projections 19B with dome shapes disposed on a region of an outer surface of heat-absorbing fin 7 facing the inner surface of tubular part 6. Projections 19B are disposed at equal intervals in an arrangement extending in the axial direction of tubular part 6. Projection 19B has a dome shape protruding outward by embossing heat-absorbing fin 7 from the inner surface side, for example. In fin unit 20 shown in the figure, in a state of contact projections 19 are inserted into tubular part 6, contact projections 19 composed of projections 19B are connected to the inner surface of tubular part 6 such that contact projections 19 are thermally coupled to tubular part 6. Moreover, contact projections 19 on the surface of fin unit 20 allows smooth insertion of fin unit 20, with lower passing resistance, into the interior of tubular part 6. Further, although not shown, heat conductive grease may be applied between projections 19B and tubular part 6, or a heat conductive sheet sandwiched between projections 19B and tubular part 6. This configuration enhances heat conduction between their two surfaces, or the like.

Battery pack 600 described above has advantages of being easily assembled, with heat-absorbing fins 7 disposed in rows being coupled to the inner surface of tubular part 6 such that heat-absorbing fins 7 are thermally coupled to tubular part 6. This is because, prior to the insertion of fin unit 20 into tubular part 6, heat-absorbing fins 7 disposed in rows are connected to fin unit 20, thereby allowing each heat-absorbing fin 7 to be connected to the inner surface of tubular part 6 such that heat-absorbing fin 7 is thermally coupled to tubular part 6.

### Exemplary Embodiment 7

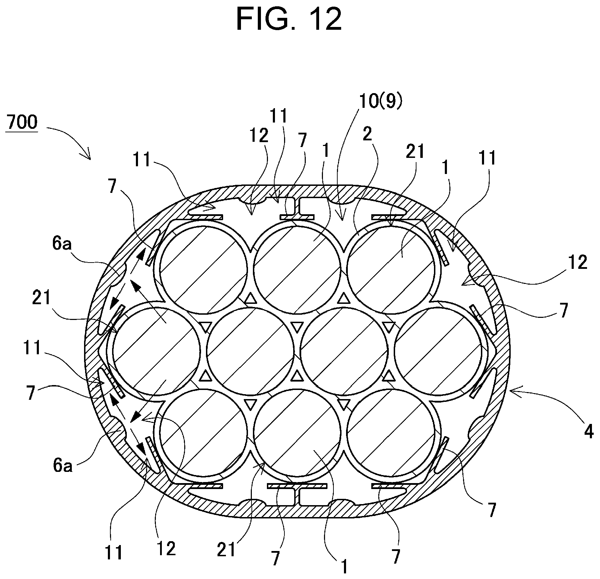

In battery pack 700 shown in FIG. 12, heat-absorbing fins 7 disposed in rows are disposed, inside tubular part 6, between tubular part 6 and core block 10 inserted into tubular part 6. Each of heat-absorbing fins 7 is unitarily formed to protrude from the inner surface of tubular part 6 and is disposed along the outer peripheral surface of core block 10.

Heat-dissipating case 4 shown in the figure includes heat-absorbing fins 7 that faces, in a transverse cross-sectional view, the outer side surfaces of insertion tubes 21 that accommodate battery cells 1 disposed in the periphery of battery holder 2. In the figure, each of heat-absorbing fins 7 disposed at both side portions of opposing plates 6A and at side plates 6B is formed in a V-shape in a plan view, thereby having the structure in which heat-absorbing fin 7 is in contact, in two directions, with the outer side surface of a corresponding one of insertion tubes 21. In addition, each of heat-absorbing fins 7 disposed at the center portions of opposing plates 6A is formed in a T-shape in a plan view, thereby having the structure in which heat-absorbing fin 7 is in contact, in one direction, with the outer side surface of a corresponding one of insertion tubes 21. In heat-dissipating case 4 shown in the figure, three V-shaped heat-absorbing fins 7 are disposed on each of the left and right sides, and one T-shaped heat-absorbing fin 7 is disposed on each of the up and down sides.

Further, heat-dissipating case 4 has slits 12 therein. Each of slits 12 is provided between tip edges of adjacent heat-absorbing fins 7. Heat-dissipating case 4 includes ducts 11 each of which constituted between the inner surface of tubular part 6 and a pair of heat-absorbing fins 7 that constitute slit 12. Heat-dissipating case 4 shown in the figure includes ducts 11 in two rows on the inner side of each of a pair of opposing plates 6A, and ducts 11 in two rows on the inner side of each of a pair of opposing plates 6B. Therefore, ducts 11 in eight rows in total are constituted along the inner side of tubular part 6. Heat-dissipating case 4 has the structure in which the ejected matter such as exhaust gases ejected from battery cells 1 pass through slits 12 and flow into ducts 11.

Tubular part 6 shown in the figure includes convex portions 6a on the surface thereof facing slits 12. Convex portions 6a extend along slits 12. Tubular part 6 has the structure in which, as indicated by the arrows in the figure, the exhaust gases having passed through slits 12 collide with convex portions 6a, are quickly diverted to both side, and flow into ducts 11. Battery pack 700 with the structure described above provides advantages of more effective heat dissipation because the ejected matter ejected from battery cells 1 is caused to quickly flow into the nearest duct 11 as indicated by the arrows in the figure.

### INDUSTRIAL APPLICABILITY

A battery pack according to the present invention is usable as a battery pack, being mounted in an electric vehicle, which includes a power supply for supplying electric power to a driving motor of the vehicle such as a power assisted bicycle, an electric motorcycle, an electric wheelchair, an electric tricycle, and an electric cart, for example.

### REFERENCE MARKS IN THE DRAWINGS

- 100, 200, 300, 400, 500, 600, 700: battery pack
- 1: battery cell
- 2: battery holder
- 3: casing
- 4: heat-dissipating case
- 5: closing part
- 5a: through hole
- 5b: peripheral wall
- 6: tubular part
- 6A: opposing plate
- 6B: side plate
- 6a: convex portion
- 7: heat-absorbing fin
- 7S: sub-heat absorbing fin
- 7a, 7b: bent section
- 8: fastening member
- 9: battery block
- 10: core block
- 11: duct
- 12: slit
- 13: heat-dissipating rod
- 13a: threaded hole
- 14: fixing screw
- 15: heat-resistant plate
- 16: coupling part 16
- 17: threaded hole
- 18: coupling part
- 19: contact projection
- 19A: projection strip
- 19B: projection
- 20: fin unit
- 21: insertion tube
- 22: through hole
- 23: insertion slit
- 24: cylindrical body
- 25: facing gap
- 90: core block
- 92: battery holder
- 93: casing
- 94: heat-dissipating case
- 94a: fixing rib
- 94c: screw hole
- 95: closing part
- 96: fastening screw
- 97: packing

## Claims

1. A battery pack comprising:
a core block (10) including a plurality of battery cells (1) and a battery holder (2) accommodating the plurality of battery cells (1) disposed at predetermined positions therein; and
a casing (3) accommodating the core block (10) therein,
wherein the casing (3) includes:
a heat-dissipating case (4) having both end openings; and
closing parts (5) closing the both end openings of the heat-dissipating case (4), and
**characterized in that** the heat-dissipating case (4) includes:
a tubular part (6) made of metal and having a tubular shape having an inner surface, the core block (10) being disposed inside the tubular part (6); and
heat-absorbing fins (7) made of metal and protruding from the tubular part (6) to an inside of the tubular part (6), the heat-absorbing fins (7) being arranged in rows and extending in an axial direction of the tubular part (6), the heat-absorbing fins (7) being thermally coupled to the inner surface of the tubular part (6).

2. The battery pack according to claim 1, wherein the heat-dissipating case (4) has a one-piece structure made of metal including the tubular part (6) and the heat-absorbing fins (7) which are unitarily formed with one another.

3. The battery pack according to claim 1,
wherein the heat-absorbing fins (7) are connected to the closing parts (5), and
wherein the closing parts (5) are connected to the tubular part (6), such that the heat-absorbing fins (7) are thermally coupling to the inner surface of the tubular part (6) via the closing parts (5).

4. The battery pack according to claim 1,
wherein the tubular part (6), the heat-absorbing fins (7), and the closing parts (5) are made of members separated from one another,
wherein the heat-absorbing fins (7) disposed in the rows are connected to one another to constitute a fin unit (20), and
wherein the fin unit (20) is inserted into the tubular part (6), such that the fin unit (20) is connected to the inner surface of the tubular part (6) and is thermally coupled to the inner surface of the tubular part (6).

5. The battery pack according to claim 3 or 4,
wherein each of the heat-absorbing fins (7) includes a contact projection (19) contacting the inner surface of the tubular part (6) such that the contact projection (19) is thermally coupled to the inner surface of the tubular part (6), and
wherein the heat-absorbing fins (7) disposed inside the tubular part (6) are connected to the inner surface of the tubular part (6) such that the each of the heat-absorbing fins (7) is thermally coupled to the inner surface of the tubular part (6) via the contact projection (19).

6. The battery pack according to any one of claims 1 to 5, wherein the heat-dissipating case (4) includes ducts (11), each of the ducts (11) being provided between the inner surface of the tubular part (6) and a corresponding one of the heat-absorbing fins (7), the ducts (11) being configured to flow ejected matter ejected from the battery cells (1) into the ducts (11).

7. The battery pack according to claim 6, wherein the ducts (11) are disposed at locations opposite to each other on an inner side of the tubular part (6) in a transverse cross section of the heat-dissipating case (4).

8. The battery pack according to claim 6, wherein the ducts (11) comprises three or more ducts (11) provided along the inner surface of the tubular part (6) in a transverse cross section of the tubular part (6).

9. The battery pack according to any one of claims 6 to 8,
wherein the heat-absorbing fins (7) include a pair of heat-absorbing fins (7) disposed at locations opposite to each other with respect to a slit (12), and
wherein each of the pair of heat-absorbing fins (7) has a first side edge and a second side edge, the first side edge being connected to the inner surface of the tubular part (6) such that the first side edge is thermally coupled to the inner surface of the tubular part (6), the second side edge serving as an opening edge of the slit (12).

10. The battery pack according to claim 9, wherein the tubular part (6) includes a convex portion (6a) provided on a surface of the tubular part (6) facing the slit (12), the convex portion (6a) extending along the slit (12).

11. The battery pack according to any one of claims 6 to 10, wherein the inner surface of the tubular part (6) and the heat-absorbing fins (7) are arcuately curved, and the ducts (11) gradually narrowing toward both side edges of the ducts (11).

12. The battery pack according to any one of claims 1 to 11, wherein the heat-dissipating case (4) is a metal molded body having a one-piece structure having an identical shape in transverse cross sections of the heat-dissipating case (4) over an entire region of the heat-dissipating case (4).

13. The battery pack according to claim 12, wherein the tubular part (6) has a tubular shape formed by either extrusion molding or pultrusion molding.

14. The battery pack according to claim 13, wherein the heat-dissipating case (4) is made of either aluminum or magnesium.

15. The battery pack according to any one of claims 1 to 14, further comprising a plurality of heat-dissipating rods disposed between the heat-absorbing fins (7) and the battery cells (1) and extending in the axial direction of the tubular part (6).

16. The battery pack according to claim 15, wherein the heat-dissipating rods are thermally coupled to the heat-absorbing fins (7).

17. The battery pack according to claim 15 or 16, wherein the heat-dissipating rods function as fastening members fastening the closing parts (5).

18. The battery pack according to any one of claims 1 to 17, wherein the heat-absorbing fins (7) function as fastening members fastening the closing parts (5).

## Patentansprüche

1. Batteriepack, umfassend:
einen Kernblock (10), der eine Vielzahl von Batteriezellen (1) und einen Batteriehalter (2) umfasst, der die Vielzahl von Batteriezellen (1) aufnimmt, die an vorbestimmten Positionen darin angeordnet sind; und
ein Gehäuse (3), das den Kernblock (10) darin aufnimmt,
wobei das Gehäuse (3) umfasst:
ein Wärmeableitungsgehäuse (4) mit Öffnungen an beiden Enden; und
Verschlussteile (5), die die Öffnungen an beiden Enden des Wärmeableitungsgehäuses (4) verschließen, und
**dadurch gekennzeichnet, dass** das Wärmeableitungsgehäuse (4) umfasst:
einen rohrförmigen Teil (6), der aus Metall hergestellt ist und eine rohrförmige Form mit einer Innenfläche aufweist, wobei der Kernblock (10) innerhalb des rohrförmigen Teils (6) angeordnet ist; und
Wärmeabsorptionsrippen (7), die aus Metall hergestellt sind und von dem rohrförmigen Teil (6) in ein Inneres des rohrförmigen Teils (6) vorstehen, wobei die Wärmeabsorptionsrippen (7) in Reihen angeordnet sind und sich in einer axialen Richtung des rohrförmigen Teils (6) erstrecken, wobei die Wärmeabsorptionsrippen (7) thermisch mit der Innenfläche des rohrförmigen Teils (6) gekoppelt sind.

2. Batteriepack nach Anspruch 1, wobei das Wärmeableitungsgehäuse (4) eine einstückige Struktur aus Metall aufweist, die den rohrförmigen Teil (6) und die Wärmeabsorptionsrippen (7) umfasst, die einstückig miteinander gebildet sind.

3. Batteriepack nach Anspruch 1,
wobei die Wärmeabsorptionsrippen (7) mit den Verschlussteilen (5) verbunden sind, und
wobei die Verschlussteile (5) mit dem rohrförmigen Teil (6) verbunden sind, sodass die Wärmeabsorptionsrippen (7) über die Verschlussteile (5) thermisch mit der Innenfläche des rohrförmigen Teils (6) gekoppelt sind.

4. Batteriepack nach Anspruch 1,
wobei der rohrförmige Teil (6), die Wärmeabsorptionsrippen (7) und die Verschlussteile (5) aus voneinander getrennten Elementen hergestellt sind,
wobei die in den Reihen angeordneten Wärmeabsorptionsrippen (7) miteinander verbunden sind, um eine Rippeneinheit (20) zu bilden, und
wobei die Rippeneinheit (20) in den rohrförmigen Teil (6) eingesetzt ist, sodass die Rippeneinheit (20) mit der Innenfläche des rohrförmigen Teils (6) verbunden ist und thermisch mit der Innenfläche des rohrförmigen Teils (6) gekoppelt ist.

5. Batteriepack nach Anspruch 3 oder 4,
wobei jede der Wärmeabsorptionsrippen (7) einen Kontaktvorsprung (19) umfasst, der die Innenfläche des rohrförmigen Teils (6) berührt, sodass der Kontaktvorsprung (19) thermisch mit der Innenfläche des rohrförmigen Teils (6) gekoppelt ist, und
wobei die innerhalb des rohrförmigen Teils (6) angeordneten Wärmeabsorptionsrippen (7) mit der Innenfläche des rohrförmigen Teils (6) verbunden sind, sodass jede der Wärmeabsorptionsrippen (7) über den Kontaktvorsprung (19) thermisch mit der Innenfläche des rohrförmigen Teils (6) gekoppelt ist.

6. Batteriepack nach einem der Ansprüche 1 bis 5, wobei das Wärmeableitungsgehäuse (4) Kanäle (11) umfasst, wobei jeder der Kanäle (11) zwischen der Innenfläche des rohrförmigen Teils (6) und einer entsprechenden Wärmeabsorptionsrippe (7) vorgesehen ist, wobei die Kanäle (11) konfiguriert sind, um ausgestoßene Materie, die von den Batteriezellen (1) ausgestoßen wird, in die Kanäle (11) strömen zu lassen.

7. Batteriepack nach Anspruch 6, wobei die Kanäle (11) an einander gegenüberliegenden Positionen auf einer Innenseite des rohrförmigen Teils (6) in einem Querschnitt des Wärmeableitungsgehäuses (4) angeordnet sind.

8. Batteriepack nach Anspruch 6, wobei die Kanäle (11) drei oder mehr Kanäle (11) umfassen, die entlang der Innenfläche des rohrförmigen Teils (6) in einem Querschnitt des rohrförmigen Teils (6) vorgesehen sind.

9. Batteriepack nach einem der Ansprüche 6 bis 8,
wobei die Wärmeabsorptionsrippen (7) ein Paar von Wärmeabsorptionsrippen (7) umfassen, die an einander gegenüberliegenden Positionen in Bezug auf einen Schlitz (12) angeordnet sind, und
wobei jede des Paars von Wärmeabsorptionsrippen (7) eine erste Seitenkante und eine zweite Seitenkante aufweist, wobei die erste Seitenkante mit der Innenfläche des rohrförmigen Teils (6) verbunden ist, sodass die erste Seitenkante thermisch mit der Innenfläche des rohrförmigen Teils (6) gekoppelt ist, wobei die zweite Seitenkante als Öffnungskante des Schlitzes (12) dient.

10. Batteriepack nach Anspruch 9, wobei der rohrförmige Teil (6) einen konvexen Abschnitt (6a) umfasst, der auf einer dem Schlitz (12) zugewandten Oberfläche des rohrförmigen Teils (6) vorgesehen ist, wobei sich der konvexe Abschnitt (6a) entlang des Schlitzes (12) erstreckt.

11. Batteriepack nach einem der Ansprüche 6 bis 10, wobei die Innenfläche des rohrförmigen Teils (6) und die Wärmeabsorptionsrippen (7) bogenförmig gekrümmt sind und die Kanäle (11) sich zu beiden Seitenkanten der Kanäle (11) hin allmählich verengen.

12. Batteriepack nach einem der Ansprüche 1 bis 11, wobei das Wärmeableitungsgehäuse (4) ein Metallformkörper mit einer einstückigen Struktur ist, der eine identische Form in Querschnitten des Wärmeableitungsgehäuses (4) über einen gesamten Bereich des Wärmeableitungsgehäuses (4) aufweist.

13. Batteriepack nach Anspruch 12, wobei der rohrförmige Teil (6) eine rohrförmige Form aufweist, die entweder durch Strangpressen oder durch Pultrusion gebildet ist.

14. Batteriepack nach Anspruch 13, wobei das Wärmeableitungsgehäuse (4) entweder aus Aluminium oder aus Magnesium hergestellt ist.

15. Batteriepack nach einem der Ansprüche 1 bis 14, ferner umfassend eine Vielzahl von Wärmeableitungsstäben, die zwischen den Wärmeabsorptionsrippen (7) und den Batteriezellen (1) angeordnet sind und sich in der axialen Richtung des rohrförmigen Teils (6) erstrecken.

16. Batteriepack nach Anspruch 15, wobei die Wärmeableitungsstäbe thermisch mit den Wärmeabsorptionsrippen (7) gekoppelt sind.

17. Batteriepack nach Anspruch 15 oder 16, wobei die Wärmeableitungsstäbe als Befestigungselemente fungieren, die die Verschlussteile (5) befestigen.

18. Batteriepack nach einem der Ansprüche 1 bis 17, wobei die Wärmeabsorptionsrippen (7) als Befestigungselemente fungieren, die die Verschlussteile (5) befestigen.

## Revendications

1. Bloc-batterie comprenant :
un bloc central (10) comprenant une pluralité d'éléments de batterie (1) et un support de batterie (2) logeant la pluralité d'éléments de batterie (1) disposés à des positions prédéterminées dans celui-ci ; et
un boîtier (3) logeant le bloc central (10) dans celui-ci,
dans lequel le boîtier (3) comprend :
un carter de dissipation thermique (4) ayant des ouvertures aux deux extrémités ; et
des pièces de fermeture (5) fermant les ouvertures aux deux extrémités du carter de dissipation thermique (4), et
**caractérisé en ce que** le carter de dissipation thermique (4) comprend :
une partie tubulaire (6) faite de métal et ayant une forme tubulaire ayant une surface intérieure, le bloc central (10) étant disposé à l'intérieur de la partie tubulaire (6) ; et
des ailettes d'absorption de chaleur (7) faites de métal et faisant saillie depuis la partie tubulaire (6) vers un intérieur de la partie tubulaire (6), les ailettes d'absorption de chaleur (7) étant disposées en rangées et s'étendant dans une direction axiale de la partie tubulaire (6), les ailettes d'absorption de chaleur (7) étant couplées thermiquement à la surface intérieure de la partie tubulaire (6).

2. Bloc-batterie selon la revendication 1, dans lequel le carter de dissipation thermique (4) a une structure monobloc faite de métal comprenant la partie tubulaire (6) et les ailettes d'absorption de chaleur (7) qui sont formées de manière unitaire l'une avec l'autre.

3. Bloc-batterie selon la revendication 1,
dans lequel les ailettes d'absorption de chaleur (7) sont reliées aux pièces de fermeture (5), et
dans lequel les pièces de fermeture (5) sont reliées à la partie tubulaire (6), de sorte que les ailettes d'absorption de chaleur (7) sont couplées thermiquement à la surface intérieure de la partie tubulaire (6) via les pièces de fermeture (5).

4. Bloc-batterie selon la revendication 1,
dans lequel la partie tubulaire (6), les ailettes d'absorption de chaleur (7) et les pièces de fermeture (5) sont faites d'éléments séparés les uns des autres,
dans lequel les ailettes d'absorption de chaleur (7) disposées dans les rangées sont reliées les unes aux autres pour constituer une unité d'ailettes (20), et
dans lequel l'unité d'ailettes (20) est insérée dans la partie tubulaire (6), de sorte que l'unité d'ailettes (20) est reliée à la surface intérieure de la partie tubulaire (6) et est couplée thermiquement à la surface intérieure de la partie tubulaire (6).

5. Bloc-batterie selon la revendication 3 ou 4,
dans lequel chacune des ailettes d'absorption de chaleur (7) comprend une saillie de contact (19) en contact avec la surface intérieure de la partie tubulaire (6) de sorte que la saillie de contact (19) est couplée thermiquement à la surface intérieure de la partie tubulaire (6), et
dans lequel les ailettes d'absorption de chaleur (7) disposées à l'intérieur de la partie tubulaire (6) sont reliées à la surface intérieure de la partie tubulaire (6) de sorte que chacune des ailettes d'absorption de chaleur (7) est couplée thermiquement à la surface intérieure de la partie tubulaire (6) via la saillie de contact (19).

6. Bloc-batterie selon l'une quelconque des revendications 1 à 5, dans lequel le carter de dissipation thermique (4) comprend des conduits (11), chacun des conduits (11) étant prévu entre la surface intérieure de la partie tubulaire (6) et une ailette d'absorption de chaleur (7) correspondante, les conduits (11) étant configurés pour faire s'écouler la matière éjectée provenant des éléments de batterie (1) dans les conduits (11).

7. Bloc-batterie selon la revendication 6, dans lequel les conduits (11) sont disposés à des emplacements opposés l'un à l'autre sur un côté intérieur de la partie tubulaire (6) dans une section transversale du carter de dissipation thermique (4).

8. Bloc-batterie selon la revendication 6, dans lequel les conduits (11) comprennent trois conduits (11) ou plus prévus le long de la surface intérieure de la partie tubulaire (6) dans une section transversale de la partie tubulaire (6).

9. Bloc-batterie selon l'une quelconque des revendications 6 à 8,
dans lequel les ailettes d'absorption de chaleur (7) comprennent une paire d'ailettes d'absorption de chaleur (7) disposées à des emplacements opposés l'un à l'autre par rapport à une fente (12), et
dans lequel chacune de la paire d'ailettes d'absorption de chaleur (7) a un premier bord latéral et un second bord latéral, le premier bord latéral étant relié à la surface intérieure de la partie tubulaire (6) de sorte que le premier bord latéral est couplé thermiquement à la surface intérieure de la partie tubulaire (6), le second bord latéral servant de bord d'ouverture de la fente (12).

10. Bloc-batterie selon la revendication 9, dans lequel la partie tubulaire (6) comprend une portion convexe (6a) prévue sur une surface de la partie tubulaire (6) faisant face à la fente (12), la portion convexe (6a) s'étendant le long de la fente (12).

11. Bloc-batterie selon l'une quelconque des revendications 6 à 10, dans lequel la surface intérieure de la partie tubulaire (6) et les ailettes d'absorption de chaleur (7) sont courbées de manière arquée, et les conduits (11) se rétrécissant progressivement vers les deux bords latéraux des conduits (11).

12. Bloc-batterie selon l'une quelconque des revendications 1 à 11, dans lequel le carter de dissipation thermique (4) est un corps métallique moulé ayant une structure monobloc ayant une forme identique dans les sections transversales du carter de dissipation thermique (4) sur toute une région du carter de dissipation thermique (4).

13. Bloc-batterie selon la revendication 12, dans lequel la partie tubulaire (6) a une forme tubulaire formée soit par moulage par extrusion soit par moulage par pultrusion.

14. Bloc-batterie selon la revendication 13, dans lequel le carter de dissipation thermique (4) est fait soit d'aluminium soit de magnésium.

15. Bloc-batterie selon l'une quelconque des revendications 1 à 14, comprenant en outre une pluralité de tiges de dissipation thermique disposées entre les ailettes d'absorption de chaleur (7) et les éléments de batterie (1) et s'étendant dans la direction axiale de la partie tubulaire (6).

16. Bloc-batterie selon la revendication 15, dans lequel les tiges de dissipation thermique sont couplées thermiquement aux ailettes d'absorption de chaleur (7).

17. Bloc-batterie selon la revendication 15 ou 16, dans lequel les tiges de dissipation thermique fonctionnent comme éléments de fixation fixant les pièces de fermeture (5).

18. Bloc-batterie selon l'une quelconque des revendications 1 à 17, dans lequel les ailettes d'absorption de chaleur (7) fonctionnent comme éléments de fixation fixant les pièces de fermeture (5).
